# EUROPEAN PATENT SPECIFICATION

(11) **EP 4 574 329 B1**
(45) Date of publication and mention of the grant of the patent: **14.10.2026**
(21) Application number: 23219416.7
(22) Date of filing: 21.12.2023
(51) Int. Cl.: B23K 31/02, B23K 31/12, B23K 37/02, G05B 19/00

(54) **METHOD FOR WELDING BY A ROBOT AND DEVICE FOR COMPUTING ROBOTIC WELDING INFORMATION**
VERFAHREN ZUM SCHWEISSEN MIT EINEM ROBOTER UND VORRICHTUNG ZUR BERECHNUNG VON ROBOTERSCHWEISSINFORMATIONEN
PROCÉDÉ DE SOUDAGE PAR ROBOT ET DISPOSITIF DE CALCUL D'INFORMATION DE SOUDAGE ROBOTIQUE

(43) Date of publication of application: 25.06.2025
(73) Proprietor: Stoiber Verwaltungs GmbH, 4122 Arnreit (AT)
(72) Inventor: Stoiber, Manuel, 4122 Arnreit (AT)
(74) Representative: Paustian & Partner Patentanwälte mbB

(56) References cited:
- WO-A1-2011/039542
- WO-A1-2023/105980
- US-A1- 2002 046 999
- US-A1- 2023 047 632

## Description

The present invention relates to computer-based methods for welding by a robot. Additionally, devices for computing robot welding information are disclosed.

### Background

Robot welding is a welding process that normally employs industrial robots to automate and perform welding tasks. It involves the use of robotic arms equipped with welding tools, such as welding torches or laser optics, to join materials, typically metals, through various welding techniques like arc welding or laser welding. These robots can be programmed to follow precise paths and welding parameters, ensuring consistent and high-quality welds. Robot welding offers advantages such as increased productivity, improved weld quality, reduced labor costs, and enhanced safety, making it widely used in mass production in industries like automotive manufacturing, aerospace, and fabrication. However, currently, robotic welding is hardly economical for small and medium batch sizes. The main reason is that robots have to be programmed specifically for each part, which is both time-consuming and expensive. Consequently, small, and medium batch sizes are typically welded by hand. Improvement in this field is highly desirable.

US2023047632 (describing the preamble of claim 1) relates to a computer-implemented method of generating instructions for a welding robot comprising identifying an expected position of a candidate seam on a part to be welded based on a Computer Aided Design (CAD) model of the part; and scanning a workspace containing the part to produce a representation of the part; afterwards the candidate seam is identified based on the representation of the part and on the expected position of the candidate seam.

### Summary

An object of the present invention is to improve automatic welding by a robot.

This object is solved by the present invention, which is defined by the subject matter of the independent claims 1 and 15. The dependent claims provide information for further embodiments. Various aspects and embodiments of these aspects are also disclosed in the summary and description below, which provide additional features and advantages.

A first aspect of the present invention defines a computer-based method for welding by a robot according to claim 1, the method comprising inter alia:
- obtaining a welding location on an object by a user;
- obtaining an environment information based on and/or comprising the welding location;
- computing a welding representation based on the welding location and the environment information;
- providing information for a robot to weld the object based on the welding representation.

A robot for welding can be any automated machine designed for joining two or more materials and/or two or more parts through some kind of welding process. A material can be, e.g., metals or plastics. A robot for welding can comprise robotics and welding technology to perform welding tasks with high accuracy and repeatability. A robot for welding can be an articulated robot, cartesian robot, SCARA robot, parallel robot, or humanoid robot, as well as a mobile robot, an industrial robot, or a service robot, just to name some typical categories. A robot for welding can include various workpiece positioners and gantry systems with multiple axes. A robot for welding can also comprises welding equipment such as a welding power supply, laser source, welding torch, weld gun, or laser optics.

A welding method and equipment can depend on the materials to be welded, the intended application, and the desired weld quality. Common welding methods include arc welding techniques such as GMAW (Gas Metal Arc Welding), GTAW (Gas Tungsten Arc Welding), FCAW (Flux-Cored Arc Welding), and SMAW (Shielded Metal Arc Welding), as well as laser welding, plasma welding, or spot welding.

An object can be any real object on which a welding operation can be performed. For example, an object can be an assembly of sheet metal parts, beams, tubes, turned and milled parts, etc. An object can also be a machine on which a piece of metal has to be welded.

A computing of information (e.g. a welding representation) in the sense of this disclosure can comprise a determining of the information with a computer.

According to the invention, a welding location comprises observable information that indicates where a welding should be performed, at least approximately. Further according to the presen tinvention, a welding location is a welding location on the object. A welding location can be provided by a human operator. The human operator can define approximate locations of welds directly on and/or relative to the object, e.g. a workpiece in the real world. For example, a human operator can indicate a welding location by providing two points with a color spray indicating that a welding should be performed on the object between the two points. The obtaining of the welding location can be performed or at least started prior to a welding operation. Additionally or alternatively, the welding location can be - at least partly - captured on-line during a welding by a welding robot.

An environment information can comprise any information from an object and/or the surroundings of an object that can influence the welding. For example, an environment information can be a visual or geometric information that allows to specify the precise location of the weld on the object. It can also be an obstacle in the vicinity of the object that can potentially collide with the welding robot during a welding operation. The obtaining of the environment information can be based on and/or parallel to an obtaining of a welding location and/or on-line during a welding by a welding robot.

A welding representation is a set of information necessary for a welding robot to perform a welding operation to weld a welding location. A welding representation can comprise geometrical/location information and/or parameter information, which, e.g., relates to a parameter of the weld and/or welding machine. For example, a welding representation can be a welding path that is determined, e.g., based on an approximate user-defined welding location and a visually captured environment. If, in addition, robot data is considered, the welding representation can provide not only the exact weld seam but also the kinematical and even the dynamical information that a robot control needs to control the welding robot to perform the welding operation. In addition, the welding representation can, e.g., include welding parameters such as the welding current, welding voltage, and wire feed speed.

Embodiments of the first aspect provide an improved automatic welding. A user can simply provide approximate welding location information on or relative to the physical object and based on this welding location an information for performing the weld by a robot is automatically generated. No object model, as in typical off-line programming methods, is needed by which the user specifies the weld on the object.

An embodiment of the first aspect relates to a method for welding by a robot, wherein the welding location can be one or more of:
- a point;
- a plurality of points, in particular a starting point and/or an ending point;
- a line;
- a part/surface of the object.

For example, a welding location can comprise a series of points marked on an object, e.g. by magnetic markers or using a pen. Additionally or alternatively, a welding location can comprise one or more lines, curves, splines, paths, or tubes, as well as 2-dimensional information, 3-dimensional information, or multi-dimensional information. Information for the welding location can be provided on the object surface as well as in 3D space. Additionally or alternatively, a welding location can be provided by simply marking two or more parts and/or surfaces that should be welded together.

An embodiment of the first aspect relates to a method for welding by a robot, wherein the welding location is provided by the user with one or more of the following:
- a visual marking;
- a pointing device;
- a coordinate measuring system;
- a tracking device.

Visual markings can comprise indicating a welding location by a pen, a spray, a tape, and/or a sticker, etc. Additionally or alternatively, a welding location can be indicated by a human user by a pointing device. A pointing device can be, e.g., a laser-pointer, a finger, a stick, etc. A coordinate measuring system can comprise, e.g., an articulated measurement arm, a gantry-based system, a cobot-based system etc. A tracking device can comprise an optical tracking system, a magnetic tracking system, a time of flight tracking system, a laser tracking system, etc. For example, an optical tracking system can comprise cameras that track a human hand, specific markers, and/or objects such as a pointing device with or without markers. A magnetic tracking system can use magnetic sensors and markers to determine the position and orientation of objects in a magnetic field. A time of flight tracking system can use the time a signal, such as an ultra-wideband signal, travels from multiple satellites to a receiver. A laser tracking system can use laser beams to measure the distance between the tracker and a target, allowing for highly accurate measurements. Alternatively, laser tracking systems exist that use the angle of attack of lasers from multiple base stations to triangulate the position and orientation of a receiver. Additionally or alternatively, a user can wear special gloves that can be tracked by a tracking device. Then the user can indicate a welding location by pointing with her/his fingers to the welding location. Thereby, a welding location can be provided in a convenient way.

An embodiment of the first aspect relates to a method for welding by a robot, wherein a plurality of welding locations for a plurality of welds are obtained from the user.

This can have the advantage that a user can define a plurality of welds on one or more objects during a (safe) phase, when the welding robot is not activated. After the welds have been defined, the user can leave the workspace of the robot (e.g. a robot cell) and the robot can start the welding operation(s). In case of a plurality of welding locations, information can be provided comprising an order in which the plurality of welds are to be executed. The order information can be provided by a user. Additionally or alternatively, order information can be computed automatically. For example, an order according to which the different welds have to be performed can arise as a result of an optimization algorithm in which a welding time, an energy consumption, and/or a welding distortion is minimized.

To distinguish between individual welding locations, visually distinguishable markings can be used. For example, in case of using a pen, one can use distinct colors. In case of using a pointing device, coordinate measuring system, or tracking device, one can, for example, differentiate between welding locations based on the order of their recordings. Also, one could use an interface that visualizes welding locations and that allows a user to select individual welding locations and define their order.

An embodiment of the first aspect relates to a method for welding by a robot, wherein the obtaining of the environment information is done by one or more of:
- a camera system;
- a pose estimation device;
- a tracking device;
- a user input.

A camera can be any device that captures visual or geometric data. For example, a camera can be a greyscale camera, an RGB camera, a depth camera, an RGB-D camera, a line scanner, a LIDAR sensor, an ultrasonic sensor, a radar sensor, etc. Cameras can be fixed, moved manually by a user, or moved automatically by robots or any other machine. In addition, it is also possible to move the object.

A pose estimation device can be any method or device that is able to provide location and/or orientation information for the camera and/or the object. The pose estimation can be time-synchronized with the camera. Pose information can be used to transform camera measurements into a unified frame of reference.

For example, a pose estimation device can be a device and/or algorithm that considers kinematic information from a robot, workpiece positioner and/or gantry system together with joint encoder measurements to compute the pose of the camera and/or the object coordinate system relative to a frame of reference. Additionally or alternatively, the relative pose can be computed directly.

In another embodiment, a pose estimation device can be a tracking device such as a camera-based tracking system, magnetic tracking system, time of flight tracking system, and/or laser tracking system that provides information about the pose of a camera and/or an object. For example, a tracking system can be used to obtain the pose of a hand-held camera.

In another embodiment, a pose estimation device can be an algorithm that uses camera measurements to infer poses of the camera and/or the object. For example, a pose estimation device can be a neural network or any other method that uses camera images and an object model to estimate the pose of the object and/or camera. Additionally or alternatively, the method can predict relative poses on consecutive camera measurements to estimate pose changes relative to an initial pose.

Environment information can also be provided by a user. A user can, for example, provide parameters, geometric primitives, or 3D models that contain information about the environment (e.g. about objects, fixtures, workcell, etc.). For example, a user can define the size of a rectangular geometry that encloses the geometry occupied by the object and/or fixtures. The robot can use this information to plan collision-free paths.

In another embodiment, environment information can be obtained with the same device(s) or method(s) that are used to obtain a welding location. A differentiation from the welding location can, for example, be based on the time the two types of information are provided (e.g. at first a welding location is provided and after a pre-defined pause environment information can be provided) and/or on an additional user input indicating that the following information is a welding location or an environment information. The human operator can simply point to important environment features using such a device and/or method. If desired, the camera can then capture those environment features. Alternatively, the information can be considered directly. For example, the user could define a plane that the robot is not allowed to cross or a volume that is occupied by the object and/or fixtures. Environment information can also be obtained based on information about a welding location. For example, a welding location is provided as a line sprayed on a specific part of an object. Then environment information can be captured along this welding location line and/or within the space that would have to be used for a robot in order to weld this line. In this way, environment information can be efficiently captured to compute a welding path and provide information for obstacles along the welding path.

In another embodiment, the user can provide additional information together with the welding location. For example, using a tracking device, the operator can record an orientation information in addition to the welding location. This orientation can indicate where to (approximately) position the camera in order to capture the environment around the welding location.

In case of automatic camera movement, automatic exploration strategies that maximize the information gain with each camera measurement can be used. Typical strategies include next best view or next best trajectory algorithms, as well as reinforcement learning. They can ensure that detailed environment information around the welding location is available. Also, such strategies can be used to maximize the size of a geometry that models the free space in the environment in which the robot can move without collision. Such a geometry can also be used during exploration to avoid collision. For example, one can start with a minimum free geometry that is, for example, set to a default shape or computed based on geometric primitives, CAD data, or any other 3D geometry provided by the user. Starting form this initial geometry, camera measurements can then be used to increase the size of the geometry and maximize the space in which the robot is allowed to move.

An embodiment of the first aspect relates to a method for welding by a robot, wherein the welding representation can comprise information related to one or more of:
- a point;
- a plurality of points, in particular a starting point and an ending point;
- a line;
- a weld;
- a path/trajectory for the robot;
- an instruction for the robot;
- a geometrical information;
- a location information;
- a parameter.

A welding representation can comprise some or all information needed for the welding robot to perform a specified welding. Hence it can comprise information related to a weld, a welding machine and/or a welding robot.

For example, if the welding location is provided as a line which is located approximately at the edge of two parts that should be welded together, then the welding representation can be determined as the exact edge of these parts by the help of the environment information. The location of the welding seam is then comprised in the welding representation as a line along the exact edge of the two parts. The welding representation can also include parameters that are required to define the weld such as the weld throat thickness.

In another example, the welding representation comprises a weld seam for arc welding that is defined as a triangle along a 3D path. It can also comprise geometric information from the environment. This information can later be used to compute collision-free robot trajectories.

In another embodiment, the welding representation can comprise a 5D path that specifies the 3D location of the weld root and the welding torch orientation (except for the orientation around the rotational axis of the welding torch). The welding torch orientation can, for example, be computed from the surfaces in the environment of the welding location and a user-defined work angle and travel angle.

In another example, the welding representation can comprise a trajectory the robot can execute to weld a welding location. The trajectory can be computed in a way that ensures that the entire trajectory is collision free. The welding representation can comprise trajectory information for both the robot and workpiece positioner. The trajectory can be computed in a way that ensures that the weld is welded in a position that was specified by the user (e.g. a downhand position). The welding representation can comprise parameters for the welding machine (e.g. a welding current, a welding voltage, a wire feed speed, etc.) that are computed automatically and/or based on user-defined parameters (e.g. welding thickness, material, etc.). The welding representation can include instructions for the robot work cell such as the starting of a welding fume extraction system or the opening and closing of a protective cover for a camera.

In another embodiment the welding location is only provided as an indication of the two parts or surfaces that should be welded together. This can be done, e.g., by just marking the two parts without providing more detailed information about a desired weld. In this case, the exact location of the weld must be computed based on the environment information. This can, for example, be done by a deep neural network that segments the two parts or surfaces. One can then compute the edges that connect the segmented parts or surfaces. The computed line can then be provided directly in the welding representation or used to compute more extensive information such as a robot path or trajectory.

An embodiment of the first aspect relates to a method for welding by a robot, wherein the welding representation is computed based on a functional representation of the welding location.

A functional representation of the welding location can consider environment information. For example, a functional representation can consider the visual appearance and geometry of the environment surrounding the welding location. It can be used to calculate exact or at least more precise constituents (e.g. a precise line, path, trajectory) of the welding representation that can be further processed, e.g. filtered and/or enriched with other information, e.g. user data, before a welding representation is computed.

For example, a functional representation of the welding location can be an algorithm that detects characteristic welding features, such as gradients, in the environment around the welding location and combines this information with information from the welding location to compute more precise constituents. For example, a functional representation of a welding location can be based on the detection of an edge at a welding location and/or at a vicinity of a welding location. Thereby, knowledge is utilized that welds are often performed along an intersection or connection between two faces or two parts that are to be welded. To detect edges, visual and/or geometric information can be used. With respect to visual information, one can, for example, define that welds should be performed at locations of high intensity gradients related to the transition between two object surfaces. With respect to geometry, one can specify that welds should be performed at locations of high surface gradients.

**In** another example, a model of the geometry and/or visual appearance of the weld environment and/or allowed divergence from the welding location can be designed. The model can be fit to data from the environment and welding location. Examples could be a mathematical model that describes the local weld environment using geometric primitives such as flat and/or curved surfaces. Another example, would be to have a model for intensity changes, e.g. form edges, in the local weld environment.

**In** another embodiment, a machine learning algorithm such as a neural network can be used. The algorithm can be trained on environment information and welding location data that is labeled with the desired output. Given new data, such an algorithm can then be used to predict the desired constituents. For example, the desired output could be a line that represents the exact weld seam location. Additionally or alternatively, the output could also be a path and/or trajectory for the robot. Training a neural network with a large number of such line data allows the network to implicitly learn the functional relation between the provided data, e.g. environment information and welding location, and the line representation.

**In** another example, a welding location specifies individual parts/surfaces that should be welded together. **In** such a scenario, algorithms can be used that segment those parts and automatically compute their intersection. Based on this information, it is possible to compute the exact location of welds that are required to weld those parts/surfaces together.

An embodiment of the first aspect relates to a method for welding by a robot, wherein the computing of the welding representation is performed such that the robot can operate collision-free.

Collision avoidance in the context of robotic welding refers to the implementation of technologies and strategies to prevent unintended collisions or contact between the welding robot and other objects or obstacles in its environment. Information for a welding robot to avoid a collision can be based on an obtained environment information. In particular the welding representation can comprise a path for the robot end effector that does not conflict with any obstacles along the welding location, on the way to the welding location, and/or on the way from the welding location.

For example, a welding location is obtained as a straight line on a part of a machine and in the middle of the welding location line is an obstacle (e.g. another part of the machine). Then the welding representation can be computed such that the welding is started at a first point and continued along up to a point after which the robot would collide with the object. Then the robot ends the welding and moves to the other side of the welding location line and welds the welding location line from the other point up to the obstacle. In other words, a welding of a straight line is implemented by two welding trajectories for the robot.

In another example, a user specifies preferred parameters such as the work angle or travel angle that influence the welding torch orientation during welding. In addition, the user also provides acceptable minimum and maximum bounds for those parameters. Due to obstacles, not the entire welding location can be welded using the desired parameters. For locations where optimal parameters would lead to collisions, the trajectory can be adjusted automatically in a way that avoids collisions. At the same time one can optimize the trajectory to ensure that parameters stay as close as possible to the desired values and remain within provided limits.

To implement strategies for collision avoidance, one can, for example use environment information to compute a geometry that encloses the object and obstacles. Close to the welding location, the surface of such a geometry is very close to the surface of the actual physical object. For other regions, only an approximate hull is computed. In general, the robot is only allowed to move outside of this geometry to avoid collision. Exceptions might exist for welding tools, such as a welding torch, during welding. For welding, the robot trajectory can be planned in a way that ensures that the robot stays outside of this geometry while staying in specified limits for parameters such as the work angle or welding position.

Similar to the previous example, one can also consider a geometry that is occupied, without a guarantee of enclosing all the geometry. For example one can use individual surface measurements in the form of a point cloud. The robot is only allowed to move outside of this geometry.

In another embodiment, a geometry that models the free space in the environment can be computed from environment information. The surface of the geometry is, again, close to the physical object for regions around the welding location and more approximate for other regions. The robot is only allowed to move inside this geometry, with some exceptions, for example, for the welding torch during welding.

An embodiment of the first aspect relates to a method for welding by a robot, comprising the step:
- obtaining a user input; and
computing the welding representation based on the user input.

A user input can provide information additional to the welding location and/or environment information. The user information can comprise additional information for computing a welding representation and/or for performing a welding operation. The additional information can be related to a weld and/or the robot that performs the weld. A user input can be in particular provided during a welding operation that is performed by a robot, i.e. on-line. Advantageously, information that was not available at the beginning of the specification of the welding task or that was forgotten can be provided by an additional user input.

A user-input can be location-specific. For example, a user specifies a welding location by three points. These three points can be serially connected by two lines. A user input can be directed to only one of these lines. A user can also specify a parameter that depends on the location along the welding location and that changes depending on the location.

A user input can be provided together with the welding location. For example, when using a tracking device to record a 3D welding location, one can additionally record the orientation of the device which can be used to specify parameters such as the working angle of the welding torch.

A user input can be provided using the device(s) or method(s) that are used to obtain a welding location. For example, using a tracking device, it is possible to specify points along a path the robot should follow.

A user input can be related to a welding parameter. For example a user input can provide information related to a weld size, a work angle, a travel angle, a welding position, a welding speed, a welding current, a welding voltage, a wire feed speed, a material, a gas flow rate, an arc length, a weaving pattern, a weld leg size, a weld throat thickness, an orientation of a weld, a direction of a weld, a laser power, a beam diameter, a defocus amount, a pulse energy, a pulse duration, a pulse frequency, etc.

To assign specific parameters to individual welding locations, visually distinguishable markings can be used. For example, one can assign different parameters to seams marked by different colors. Additionally or alternatively, parameters can be assigned to individual recordings of welding locations. Also, it is possible to have an interface that visualizes individual welding locations and that allows to assign parameters.

An embodiment of the first aspect relates to a method for welding by a robot, comprising the step:
- obtaining an approval of the welding representation by the user.

An approval by a human user can be obtained or required after a welding location has been captured and in particular displayed to a user. Additionally or alternatively, an approval can be obtained or required after an environment information has been captured and in particular displayed to a user. Additionally or alternatively, an approval can be obtained or required after a welding representation has been computed and in particular displayed to a user. Additionally or alternatively, an approval can be obtained or required after any intermediate computation has been performed and in particular results have been displayed to a user. Additionally or alternatively, an approval can be obtained or required after a welding representation has been received and/or processed by a robot control that controls the welding robot, i.e. an approval can be required right before the start of the welding operation. Additionally or alternatively, an approval can be obtained or required on-line during a welding by a welding robot.

An embodiment of the first aspect relates to a method for welding by a robot, comprising the step:
- obtaining information about the robot to be used for the welding; and wherein the welding location, the environment information, and/or the welding representation is based on the information about the robot.

An information about a robot used for a welding operation can be provided by a user. Additionally or alternatively, information about the welding robot can be obtained (received/fetched) automatically. For example, an information about the robot can be obtained automatically directly before a welding location and/or an environment information is obtained. In this case, the information for computing a "complete" welding representation, i.e. a welding representation that can be directly executed by the welding robot, can be available. Such a welding representation can, for example, optimize trajectories based on kinematic and dynamic capabilities of the robot. In other embodiments only an "incomplete" information about the robot is obtained, e.g., an information about an available workspace. In this way the welding representation can be computed at least up to but not including a kinematical configuration and/or it can be analyzed whether the obtained welding location can be welded with the available robot.

In addition to using information about the robot for the computation of the welding representation, information about the robot can also be used in obtaining the welding location and/or the environment information. For example, when defining the welding location the user can use a pointing device that is tracked by a sensor mounted to the robot. In such a case, information about the robot kinematic is required to compute the location of the pointing device relative to a world coordinate system. Similarly, when obtaining an environment information, a camera can be moved by the robot. Information about the pose of the camera relative to a world coordinate system can again require information about the robot kinematic. Information about a welding robot can come from the welding robot itself and/or from a robot control that is attached to the welding robot. Additionally or alternatively, information about a welding robot can come from a central instance and/or a cloud control. This can be advantageous in particular if a plurality of welding robot types are available for welding an obtained welding location. In this case a welding robot can be selected that optimally suites for the welding task at hand, e.g. that is able to weld the desired welding location and/or that can weld a desired welding location in a minimal time and/or energy.

An embodiment of the first aspect relates to a method for welding by a robot, wherein information related to the welding representation, in particular information related to a robot trajectory, is computed during the robot operation.

To improve the accuracy of robot trajectories for welding, adaptation techniques can be used. Adaptation techniques adapt the planned robot path based on sensor measurements of the environment. Sensor measurements can be obtained during the robot operation either before the welding is started or while the welding is performed. Existing adaptation techniques include seam finding and seam tracking techniques such as touch sensing, wire sensing, laser point sensing, or arc seam tracking. Additionally or alternatively seam finding and tracking techniques can be adopted that use a camera, a laser vision sensors (e.g. line scanner), an ultrasonic sensor, and/or tactile sensing.

In another embodiment, on-line information can be provided by an observation system that observes the welding operation. This can be, e.g., a line scanner and/or a camera. Based on the information obtained by the observation device, in particular a quality of the weld can be analyzed. Additionally or alternatively, it can be analyzed if an obstacle occurred that had not been observed when the environment information was obtained. In this case a welding operation can be stopped or automatically adapted.

An embodiment of the first aspect relates to a method for welding by a robot, wherein the robot motions for welding are planned automatically.

To generate a robot path/trajectory for welding, automatic motion planning algorithms can be used. Such algorithms can use environment information (e.g. information about occupied geometry), information about the robot (e.g. robot kinematic and geometry), and/or user-provided information (e.g. weld parameters). In general, motion planning algorithms can be used to plan trajectories for robots with different numbers of degrees of freedom, starting from simple minimally parameterized robots to complex redundant systems that include workpiece positioners, gantry systems, etc.

For example, motion planning can be used to compute a robot path/trajectory in joint space that follows a weld path that is provided in cartesian space. Automatic motion planning can thereby ensure that the robot accurately follows the desired weld path. Additionally or alternatively, algorithms can ensure that the robot avoids collisions, remains within limits for parameters such as the welding speed, work angle, travel angle, welding position etc. Also, motion planning algorithms can maximize a safety distance between the robot and the welding environment. Typical motion planning methods for such tasks include optimization-based path planning, path-wise inverse kinematics, and/or sampling based methods.

In another embodiment, automatic motion planning can also be used to plan paths/trajectories that allow the robot to move from an initial robot configuration to the start of the weld, from the end of one weld to the start of another weld, from an initial configuration to a tool changer configuration, etc. Motion planning algorithms can thereby try to avoid collisions, optimize speed, optimize energy, maximize the safety distance between the robot and the environment, etc. Typical examples of motion planning algorithms include sampling based methods (probabilistic roadmap, rapidly exploring random trees, etc.), optimization based methods (covariant Hamiltonian optimization for motion planning, stochastic trajectory optimization for motion planning, etc.), learning based methods (deep learning, reinforcement learning, etc.), and/or search based methods.

In another embodiment, automatic motion planning can be combined with exploration strategies that maximize the information gain with each camera measurement. For example, a camera pose can be computed using a next best view algorithm. A motion planning algorithm can then plan a path that allows the robot to move the camera to the desired pose. Additionally or alternatively, next best trajectory algorithms can directly plan how the robot should move. Also, reinforcement learning methods can be used.

An embodiment of the first aspect relates to a method for welding by a robot, comprising the step:
- computing a robot welding information that is executed by the robot, in particular a robot trajectory, based on the welding representation.

The welding representation may not comprise the complete information needed to perform the welding operation. In this case the information necessary to complete the welding operation needs to be computed. This information can include kinematic and/or dynamic information.

A second aspect of the present invention defines a computer-implemented device for computing robotic welding information according to claim 15, and configured to:
- obtaining a welding location relative to an object by a user;
- obtaining an environment information based on and/or comprising the welding location;
- computing a welding representation based on the welding location and the environment information;
- providing information for a robot to weld the object based on the welding representation.

The device can in particular be configured to perform a method according to an embodiment of the first aspect of the present invention. The device can be a robot control that controls the welding robot. The device can also be a different device that is configured to communicate with one or more welding robots directly and or indirectly.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.

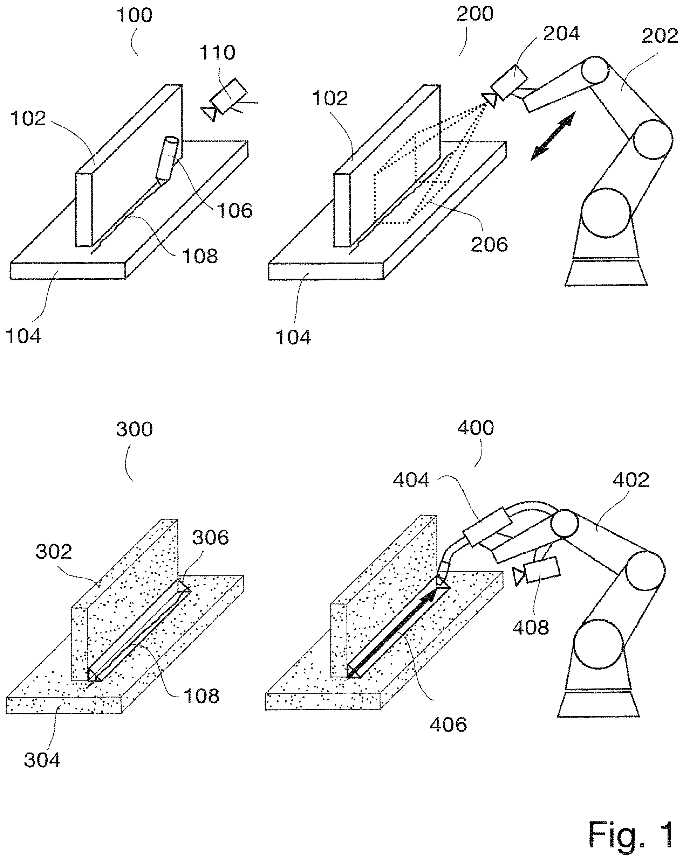

Fig. 1 illustrates a computer-implemented method for welding by a robot.

In the following description reference is made to the accompanying figures which form part of the disclosure, and which illustrate specific aspects in which the present disclosure can be understood. Identical reference signs refer to identical or at least functionally or structurally similar features.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

### Detailed description

Fig. 1 illustrates a computer-implemented method for welding by a robot. At first a welding location is provided by a user. This is illustrated by the upper left subfigure 100. Thereby, the user marks an approximate position of a welding seam in order to weld together two parts 102, 104 of an object. In this case the welding location is marked as a rather straight line at an edge at which the two objects meet (i.e. at the intersection). The user can use a simple marking device, e.g. a pen, 106, to provide the welding location 108. The welding location is observed by a camera system 110. After being observed the welding location can be approximated or modelled, e.g. as a spline curve, in order to be further processed effectively.

After a welding location 108 has been obtained, environment information is obtained. This is illustrated by the upper right subfigure 200. The environment information 206 is observed with a camera system 204 that is mounted on a movable device, e.g. a robot 202. In this way, the environment information 206 can be captured in detail on the basis of the obtained welding location 108. In other words the robot that moves the camera for capturing the environment information is guided by the obtained welding location 108.

In an alternative embodiment, the welding location and the environment information can be captured by the same camera system (in this case camera 110 and camera 204 are the same devices). In particular, welding location and environment information can be captured in a single operation. For example, the robot camera 204 starts by moving around the object, maximizing the observed environment. If the robot camera 204 detects a welding location and moves the camera to capture environment 206 in the vicinity of the detected welding location. In particular, the robot can thereby follow the marked welding location until it finds the beginning and/or end of the welding location. Note that while the robot moves, it can already consider the captured environment information to ensure that motions are collision-free.

After the welding location 108 and enough environment information 206 is obtained, a welding representation is computed. This is illustrated by the lower left subfigure 300. Based on the environment information 206, the two parts 102, 104 to be welded were modelled as 3D-point-clouds 302, 304. In this case the welding representation 306 is computed as an elongated triangularshaped form that is centered at the edge of the two parts that are to be welded together. The triangle-shaped form of the welding representation 306 defines the cross-section of the welding seam. The edge of the two parts 302, 304, which is the elongation of the welding representation 306, defines the path of the welding seam. Other parameters, such as the welding direction, can also be comprised by the welding representation.

Based on the welding representation 306, a welding robot can be selected and used for welding the two parts 102, 104. This is illustrated by the lower right subfigure 400. The welding robot 402 is selected with enough working space to move the welding torch 404 to weld the complete welding representation. Information for the welding trajectory 406, such as the welding direction, is comprised in the welding representation. Other information to execute the welding operation might be provided by the robot control. The welding robot 402 also comprises a camera 408 by which the weld and the local welding environment is analyzed concurrently to the welding. This provides the opportunity to, for example, observe the geometry of the welding environment and adjust the robot trajectory accordingly. This might, for example, be important if the object geometry changes due to welding distortion. Also, the camera allows to continuously inspect the quality of the weld and continuously control welding parameters if necessary.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Embodiments may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g. sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g. a classification algorithm, a regression algorithm or a similarity learning algorithm. Classification algorithms may be used when the outputs are restricted to a limited set of values (categorical variables), i.e. the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. **In** unsupervised learning, (only) input data might be supplied, and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e. outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g. a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate, or apply the knowledge.

Machine-learning algorithms are usually based on a machine-learning model. In other words, the term "machine-learning algorithm" may denote a set of instructions that may be used to create, train, or use a machine-learning model. The term "machine-learning model" may denote a data structure and/or set of rules that represents the learned knowledge (e.g. based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e. support vector networks) are supervised learning models with associated learning algorithms that may be used to analyze data (e.g. in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

### List of reference signs

- 100: obtaining welding location
- 102: part to be welded
- 104: part to be welded
- 106: marking device
- 108: welding location
- 110: camera system
- 200: obtaining environment information
- 202: robot for visual measurement
- 204: camera
- 206: observed environment
- 300: computation of welding representation
- 302: modelled part to be welded
- 304: modelled part to be welded
- 306: welding representation
- 400: performing welding operation
- 402: welding robot
- 404: welding torch
- 406: welding trajectory
- 408: camera

## Claims

1. A computer-implemented method for welding by a robot, the method being **characterised by** the steps:
- obtaining a welding location (108) on an object (102, 104) by a user (106), wherein the welding location comprises observable information that indicates where a welding should be performed;
- obtaining an environment information (206) based on and/or comprising the welding location;
- computing a welding representation (306) based on the welding location and the environment information;
- providing information for a robot (402, 404) to weld the object based on the welding representation.

2. The method according to claim 1,
wherein the welding location (108) can be one or more of:
- a point;
- a plurality of points, in particular a starting point and/or an ending point;
- a line;
- a part/surface of the object.

3. The method according to one of the preceding claims,
wherein the welding location (108) is provided by the user (106) with one or more of the following:
- a visual marking;
- a pointing device;
- a coordinate measuring system;
- a tracking device.

4. The method according to one of the preceding claims,
wherein a plurality of welding locations (108) for a plurality of welds are obtained from the user (106).

5. The method according to one of the preceding claims,
wherein the obtaining of the environment information (206) is done by one or more of:
- a camera system;
- a pose estimation device;
- a tracking device;
- a user input.

6. The method according to one of the preceding claims,
wherein the welding representation (306) can comprise information related to one or more of:
- a point;
- a plurality of points, in particular a starting point and an ending point;
- a line;
- a weld;
- a path/trajectory for the robot;
- an instruction for the robot;
- a geometrical information;
- a location information;
- a parameter.

7. The method according to one of the preceding claims,
wherein the welding representation is computed based on a functional representation of the welding location (108).

8. The method according to one of the preceding claims,
wherein the computing of the welding representation (306) is performed such that the robot (402) can operate collision-free.

9. The method according to one of the preceding claims,
comprising the step:
- obtaining a user input; and
computing the welding representation (306) based on the user input.

10. The method according to one of the preceding claims,
comprising the step:
- obtaining an approval of the welding representation (306) by the user.

11. The method according to one of the preceding claims,
comprising the step:
- obtaining information about the robot (402, 404) to be used for the welding; and
wherein the welding location (108), the environment information (206), and/or the welding representation (306) is based on the information about the robot.

12. The method according to one of the preceding claims,
wherein information related to the welding representation (306), in particular information related to a robot trajectory, is computed during the robot operation.

13. The method according to one of the preceding claims,
wherein the robot motions for welding are planned automatically.

14. The method according to one of the preceding claims,
comprising the step:
- computing a robot welding information that is executed by the robot (402, 404), in particular a robot trajectory, based on the welding representation (306).

15. A device for computing robotic welding information,
configured to:
- obtaining a welding location (108) on an object (102, 104) by a user, wherein the welding location comprises observable information that indicates where a welding should be performed;
- obtaining an environment information (206) based on and/or comprising the welding location;
- computing a welding representation (306) based on the welding location and the environment information;
- providing information for a robot (402, 404) to weld the object based on the welding representation.

## Patentansprüche

1. Computerimplementiertes Verfahren zum Schweißen durch einen Roboter, wobei das Verfahren **gekennzeichnet ist durch** die Schritte:
- Erhalten einer Schweißstelle (108) an einem Objekt (102, 104) durch einen Benutzer (106), wobei die Schweißstelle beobachtbare Information umfasst, die angibt, wo eine Schweißung durchgeführt werden soll;
- Erhalten einer Umgebungsinformation (206), die auf der Schweißstelle basiert und/oder diese umfasst;
- Berechnen einer Schweißrepräsentation (306) basierend auf der Schweißstelle und der Umgebungsinformation;
- Bereitstellen von Information für einen Roboter (402, 404) zum Schweißen des Objekts basierend auf der Schweißrepräsentation.

2. Verfahren nach Anspruch 1,
wobei die Schweißstelle (108) eines oder mehrere der Folgenden sein kann:
- ein Punkt;
- eine Mehrzahl von Punkten, insbesondere ein Startpunkt und/oder ein Endpunkt;
- eine Linie;
- ein Teil/eine Fläche des Objekts.

3. Verfahren nach einem der vorhergehenden Ansprüche,
wobei die Schweißstelle (108) von dem Benutzer (106) mit einem oder mehreren der Folgenden bereitgestellt wird:
- einer visuellen Markierung;
- einem Zeigegerät;
- einem Koordinatenmesssystem;
- einer Nachverfolgungsvorrichtung.

4. Verfahren nach einem der vorhergehenden Ansprüche,
wobei eine Mehrzahl von Schweißstellen (108) für eine Mehrzahl von Schweißnähten von dem Benutzer (106) erhalten wird.

5. Verfahren nach einem der vorhergehenden Ansprüche,
wobei das Erhalten der Umgebungsinformation (206) durch eines oder mehrere der Folgenden erfolgt:
- ein Kamerasystem;
- eine Posenschätzungsvorrichtung;
- eine Nachverfolgungsvorrichtung;
- eine Benutzereingabe.

6. Verfahren nach einem der vorhergehenden Ansprüche,
wobei die Schweißrepräsentation (306) Information umfassen kann, die sich auf eines oder mehrere der Folgenden bezieht:
- einen Punkt;
- eine Mehrzahl von Punkten, insbesondere einen Startpunkt und einen Endpunkt;
- eine Linie;
- eine Schweißnaht;
- einen Pfad/eine Trajektorie für den Roboter;
- eine Anweisung für den Roboter;
- eine geometrische Information;
- eine Ortsinformation;
- einen Parameter.

7. Verfahren nach einem der vorhergehenden Ansprüche,
wobei die Schweißrepräsentation basierend auf einer funktionalen Repräsentation der Schweißstelle (108) berechnet wird.

8. Verfahren nach einem der vorhergehenden Ansprüche,
wobei das Berechnen der Schweißrepräsentation (306) derart durchgeführt wird, dass der Roboter (402) kollisionsfrei arbeiten kann.

9. Verfahren nach einem der vorhergehenden Ansprüche,
umfassend den Schritt:
- Erhalten einer Benutzereingabe; und
Berechnen der Schweißrepräsentation (306) basierend auf der Benutzereingabe.

10. Verfahren nach einem der vorhergehenden Ansprüche,
umfassend den Schritt:
- Erhalten einer Freigabe der Schweißrepräsentation (306) durch den Benutzer.

11. Verfahren nach einem der vorhergehenden Ansprüche,
umfassend den Schritt:
- Erhalten von Information über den für das Schweißen zu verwendenden Roboter (402, 404); und
wobei die Schweißstelle (108), die Umgebungsinformation (206) und/oder die Schweißrepräsentation (306) auf der Information über den Roboter basiert.

12. Verfahren nach einem der vorhergehenden Ansprüche,
wobei Information, die sich auf die Schweißrepräsentation (306) bezieht, insbesondere Information, die sich auf eine Robotertrajektorie bezieht, während des Roboterbetriebs berechnet wird.

13. Verfahren nach einem der vorhergehenden Ansprüche,
wobei die Roboterbewegungen für das Schweißen automatisch geplant werden.

14. Verfahren nach einem der vorhergehenden Ansprüche,
umfassend den Schritt:
- Berechnen einer Roboter-Schweißinformation, die von dem Roboter (402, 404) ausgeführt wird, insbesondere einer Robotertrajektorie, basierend auf der Schweißrepräsentation (306).

15. Vorrichtung zum Berechnen von Roboter-Schweißinformation,
die konfiguriert ist zum:
- Erhalten einer Schweißstelle (108) an einem Objekt (102, 104) durch einen Benutzer, wobei die Schweißstelle beobachtbare Information umfasst, die angibt, wo eine Schweißung durchgeführt werden soll;
- Erhalten einer Umgebungsinformation (206), die auf der Schweißstelle basiert und/oder diese umfasst;
- Berechnen einer Schweißrepräsentation (306) basierend auf der Schweißstelle und der Umgebungsinformation;
- Bereitstellen von Information für einen Roboter (402, 404) zum Schweißen des Objekts basierend auf der Schweißrepräsentation.

## Revendications

1. Procédé mis en œuvre par ordinateur pour le soudage par un robot,
le procédé étant **caractérisé par** les étapes suivantes :
- obtention d'un emplacement de soudage (108) sur un objet (102, 104) par un utilisateur (106), dans lequel l'emplacement de soudage comprend une information observable qui indique où un soudage doit être effectué ;
- obtention d'une information d'environnement (206) basée sur l'emplacement de soudage et/ou comprenant celui-ci ;
- calcul d'une représentation de soudage (306) sur la base de l'emplacement de soudage et de l'information d'environnement ;
- fourniture d'une information destinée à un robot (402, 404) pour souder l'objet sur la base de la représentation de soudage.

2. Procédé selon la revendication 1,
dans lequel l'emplacement de soudage (108) peut être un ou plusieurs des éléments suivants :
- un point ;
- une pluralité de points, en particulier un point de départ et/ou un point d'arrivée ;
- une ligne ;
- une partie/surface de l'objet.

3. Procédé selon l'une des revendications précédentes,
dans lequel l'emplacement de soudage (108) est fourni par l'utilisateur (106) au moyen d'un ou plusieurs des éléments suivants :
- un marquage visuel ;
- un dispositif de pointage ;
- un système de mesure de coordonnées ;
- un dispositif de suivi.

4. Procédé selon l'une des revendications précédentes,
dans lequel une pluralité d'emplacements de soudage (108) pour une pluralité de soudures sont obtenus de l'utilisateur (106).

5. Procédé selon l'une des revendications précédentes,
dans lequel l'obtention de l'information d'environnement (206) est effectuée par un ou plusieurs des éléments suivants :
- un système de caméra ;
- un dispositif d'estimation de pose ;
- un dispositif de suivi ;
- une entrée utilisateur.

6. Procédé selon l'une des revendications précédentes,
dans lequel la représentation de soudage (306) peut comprendre une information relative à un ou plusieurs des éléments suivants :
- un point ;
- une pluralité de points, en particulier un point de départ et un point d'arrivée ;
- une ligne ;
- une soudure ;
- un chemin/une trajectoire pour le robot ;
- une instruction pour le robot ;
- une information géométrique ;
- une information de localisation ;
- un paramètre.

7. Procédé selon l'une des revendications précédentes,
dans lequel la représentation de soudage est calculée sur la base d'une représentation fonctionnelle de l'emplacement de soudage (108).

8. Procédé selon l'une des revendications précédentes,
dans lequel le calcul de la représentation de soudage (306) est effectué de telle sorte que le robot (402) puisse fonctionner sans collision.

9. Procédé selon l'une des revendications précédentes,
comprenant l'étape suivante :
- obtention d'une entrée utilisateur ; et
calcul de la représentation de soudage (306) sur la base de l'entrée utilisateur.

10. Procédé selon l'une des revendications précédentes,
comprenant l'étape suivante :
- obtention d'une approbation de la représentation de soudage (306) par l'utilisateur.

11. Procédé selon l'une des revendications précédentes,
comprenant l'étape suivante :
- obtention d'une information concernant le robot (402, 404) à utiliser pour le soudage ; et
dans lequel l'emplacement de soudage (108), l'information d'environnement (206) et/ou la représentation de soudage (306) est basé sur l'information concernant le robot.

12. Procédé selon l'une des revendications précédentes,
dans lequel une information relative à la représentation de soudage (306), en particulier une information relative à une trajectoire de robot, est calculée pendant le fonctionnement du robot.

13. Procédé selon l'une des revendications précédentes,
dans lequel les mouvements du robot pour le soudage sont planifiés automatiquement.

14. Procédé selon l'une des revendications précédentes,
comprenant l'étape suivante :
- calcul, sur la base de la représentation de soudage (306), d'une information de soudage de robot qui est exécutée par le robot (402, 404), en particulier d'une trajectoire de robot.

15. Dispositif pour calculer une information de soudage robotisé,
configuré pour :
- obtenir un emplacement de soudage (108) sur un objet (102, 104) par un utilisateur, dans lequel l'emplacement de soudage comprend une information observable qui indique où un soudage doit être effectué ;
- obtenir une information d'environnement (206) basée sur l'emplacement de soudage et/ou comprenant celui-ci ;
- calculer une représentation de soudage (306) sur la base de l'emplacement de soudage et de l'information d'environnement ;
- fournir une information destinée à un robot (402, 404) pour souder l'objet sur la base de la représentation de soudage.
